# EUROPÄISCHE PATENTSCHRIFT

(11) **EP 2 193 287 B1**
(45) Veröffentlichungstag und Bekanntmachung des Hinweises auf die Patenterteilung: **16.11.2011**
(21) Anmeldenummer: 08803048.1
(22) Anmeldetag: 15.08.2008
(51) Int. Cl.: F16H 37/08, F16H 47/04

(54) **LEISTUNGSVERZWEIGUNGSGETRIEBE**
POWER-BRANCHED TRANSMISSION
TRANSMISSION À RÉPARTITION DE PUISSANCE

(30) Priorität: 02.10.2007 DE 102007047194; 16.07.2008 DE 102008040444
(43) Veröffentlichungstag der Anmeldung: 09.06.2010
(73) Patentinhaber: ZF Friedrichshafen AG, 88038 Friedrichshafen (DE)
(72) Erfinder: FISCHER, Walter, 88045 Friedrichshafen (DE); POHLENZ, Jürgen, 88214 Ravensburg (DE); BAILLY, Gerhard, 88046 Friedrichshafen (DE); RATZMANN, Thomas, 88074 Meckenbeuren (DE)
(86) Internationale Anmeldenummer: PCT/EP2008/060756
(87) Internationale Veröffentlichungsnummer: WO 2009/047034

(56) Entgegenhaltungen:
- WO-A-2004/038257
- US-A- 4 446 756
- US-A1- 2004 242 357

## Beschreibung

Die Erfindung bezieht sich auf ein Leistungsverzweigungsgetriebe nach der im Oberbegriff von Anspruch 1 näher definierten Art.

Gattungsgemäße Leistungsverzweigungsgetriebe werden in Arbeitsmaschinen oder Landmaschinen, wie beispielsweise Schlepper, eingesetzt, bei welchen die Getriebeaußenform schlank und langgestreckt ausgeführt sein muß.

Die WO 2004/038257A offenbart ein Leistungsverzweigungsgetriebe nach dem Oberbegriff des Hauptanspruchs.

Aus der DE 10 2006 025 348 A1 ist ein Leistungsverzweigungsgetriebe mit einem als Hydrostateinrichtung ausgebildeten Variator bekannt. Das Leistungsverzweigungsgetriebe ist mit einem leistungsverzweigenden Planetengetriebe ausgeführt, wobei eine Welle des Planetengetriebes mit einer ersten Welle des Variators wirkverbunden ist und hierüber eine verstellbare Pumpe antreibt. Eine weitere Welle des Planetengetriebes ist über eine Zahnradstufe mit einer weiteren Welle des Variators verbunden, die wiederum mit einem Hydromotor des Variators wirkverbunden ist. Die dritte Welle des Planetengetriebes ist mit einem Getriebeeingang des Leistungsverzweigungsgetriebes verbunden, der mit einer Antriebseinrichtung in Verbindung steht. Zusätzlich ist die zweite Welle des Variators mit mehreren Festrädern ausgeführt, welche mit mehreren auf einer Vorgelegewelle angeordneten Losrädern kämmen, wobei die Losräder zur Darstellung verschiedener Fahrbereiche bzw. Übersetzungsbereiche für Vorwärtsfahrt und wenigstens eines Fahrbereichs für Rückwärtsfahrt über Schaltelemente drehfest mit der Vorgelegewelle verbindbar sind.

Die Wechsel zwischen den Fahrbereichen sind nachteilhafterweise nicht synchron durchführbar, wobei zur Vermeidung einer Unterbrechung der Zugkraft auf jeden Fall während eines Fahrbereichswechsels eine Lastschaltung mit einer Korrektur der Übersetzung im Bereich der Hydrostateinrichtung durchzuführen ist. Während solcher Schaltungen treten störende Reaktionsmomente im Antriebsstrang auf, die im Betrieb von einer Bedienperson als Ruck wahrnehmbar sind.

Der vorliegenden Erfindung liegt die Aufgabe zugrunde, ein Leistungsverzweigungsgetriebe zu schaffen, welches in einer Arbeits- oder Landmaschine, wie beispielsweise einem Schlepper, verwendet werden kann, einen einfachen konstruktiven Aufbau aufweist und mittels welchem synchrone Fahrbereichswechsel durchführbar sind.

Die Aufgabe wird mit einem, auch die kennzeichnenden Merkmale des Hauptanspruchs aufweisenden, gattungsgemäßen Leistungsverzweigungsgetriebe gelöst.

Das Leistungsverzweigungsgetriebe weist eine Antriebswelle auf, welche von einem Antriebsmotor, wie beispielsweise einem Verbrennungsmotor, antreibbar ist. Ein Summierungsplanetengetriebe steht einerseits mit der Antriebswelle und andererseits mit einem Variator in Verbindung. Das Summierungsplanetengetriebe weist einen Planetenträger, mindestens ein Sonnenrad und ein Hohlrad auf. Der Planetenträger ist über ein Stirnradgetriebe mit der Antriebswelle wirkverbunden. Der Variator weist eine erste und eine zweite Welle auf, wobei die erste Welle drehfest mit dem Sonnenrad des Summierungsplanetengetriebes verbunden ist und die zweite Welle über ein Stirnradgetriebe mit dem Hohlrad des Summierungsplanetengetriebes wirkverbunden ist. Der Variator besteht vorzugsweise aus einer hydrostatischen Pumpe und einem hydrostatischen Motor, wobei der hydrostatische Motor und die hydrostatische Pumpe als Schrägachsenantriebs-Einheiten ausgebildet sein können und das Hubvolumen über ein gemeinsames Doppeljoch verstellbar ist. Dieser hydrostatische Variator kann beispielsweise wie der Variator der DE 10 2006 025 347 B3 ausgeführt sein.

Die Drehachse des Sonnenrades des Summierungsplanetengetriebes ist parallel zur Drehachse der Antriebswelle angeordnet, die Drehachsen der ersten und der zweiten Welle des Variators sind ebenfalls parallel angeordnet und eine Abtriebswelle des Getriebes, welche mit einer Antriebsachse, welche die Antriebsräder antreibt, in Verbindung steht, ist ebenfalls parallel zur Antriebswelle angeordnet. Die Antriebswelle, das Sonnenrad und die Abtriebswelle sind beabstandet zueinander angeordnet. Das Summierungsplanetengetriebe weist ein Doppelplanetenrad auf, durch dessen Verwendung der Standübersetzungsbereich des Planetengetriebes derart erweitert werden kann, dass der radial für das Getriebe zur Verfügung stehende Bauraum eingehalten wird. Dadurch besteht die Möglichkeit, in radialer Richtung ein schlankes Getriebe zu schaffen. Das Hohlrad des Doppelplanetengetriebes ist über eine Schalteinrichtung mit einem ersten Stirnradgetriebe verbindbar, über welches die Abtriebswelle antreibbar ist, und über eine Schalteinrichtung mit einem zweiten Stirnradgetriebe verbindbar, über welches die Abtriebswelle antreibbar ist. Ein Sonnenrad des Summierungsplanetengetriebes ist über eine Schalteinrichtung mit einem dritten Stirnradgetriebe verbindbar, welches die Antriebswelle antreibt, und über eine Schalteinrichtung mit einem vierten Stirnradgetriebe verbindbar, welches die Abtriebswelle antreibt. Die Schalteinrichtungen sind somit dem Summierungsplanetengetriebe nachgeschaltet angeordnet. Das Leistungsverzweigungsgetriebe ist somit als stufenloses Leistungsverzweigungsgetriebe mit sekundärer Koppelung aufgebaut.

In einer weiteren Ausgestaltungsform der Erfindung weist das Summierungsplanetengetriebe zwei Sonnenräder auf, wobei ein Sonnenrad mit einem ersten Planetenrad des Doppelplanetenrades und das zweite Sonnenrad mit dem zweiten Planetenrad des Doppelplanetenrades im Eingriff steht. Das erste Sonnenrad ist mit dem Variator verbunden, und das zweite Sonnenrad ist mittels der Schalteinrichtung entweder über das dritte oder das vierte Stirnradgetriebe mit der Abtriebswelle verbunden. Das Hohlrad kann entweder mit dem einen Planetenrad des Doppelplanetenrades oder dem anderen Planetenrad des Doppelplanetenrades im Eingriff stehen. Dadurch sind zusätzliche Freiheitsgrade für die konstruktive Auslegung vorhanden, wodurch eine Anpassung für den speziellen Fahrzeugeinsatz möglich ist. Über die Schalteinrichtungen werden unterschiedliche Übersetzungsbereiche geschaltet, innerhalb welcher die Übersetzung über den Variator jeweils stufenlos veränderbar ist. Das Leistungsverzweigungsgetriebe ist aus dem Stillstand leistungsverzweigt anfahrbar, wodurch eine Belastung des Variators auf einfache Art und Weise im Vergleich zu aus der Praxis bekannten Getriebeeinrichtungen, bei welchen ein Anfahrmoment während des Anfahrens einer Arbeitsmaschine vollständig über den Variator geführt wird, reduziert ist.

Bei einer weiteren vorteilhaften Ausführungsform der erfindungsgemäßen Getriebevorrichtung ist eine Drehrichtungsumkehr zwischen dem Getriebeeingang und dem Getriebeausgang mittels einer Ventileinrichtung des hydrostatischen Kreislaufes des Variators darstellbar, über welche eine Fördereinrichtung im hydraulischen Kreislauf umschaltbar ist.

Weitere Merkmale sind der Figuren-Beschreibung zu entnehmen.
Es zeigen:
- Fig. 1: ein Getriebeschema des Leistungsverzweigungsgetriebes, wobei das Summierungsplanetengetriebe ein Sonnenrad aufweist;
- Fig. 2: ein Getriebeschema des Leistungsverzweigungsgetriebes, wobei das Summierungsplanetengetriebe zwei Sonnenräder aufweist und das Hohlrad mit dem ersten Planetenrad in Wirkverbindung steht und

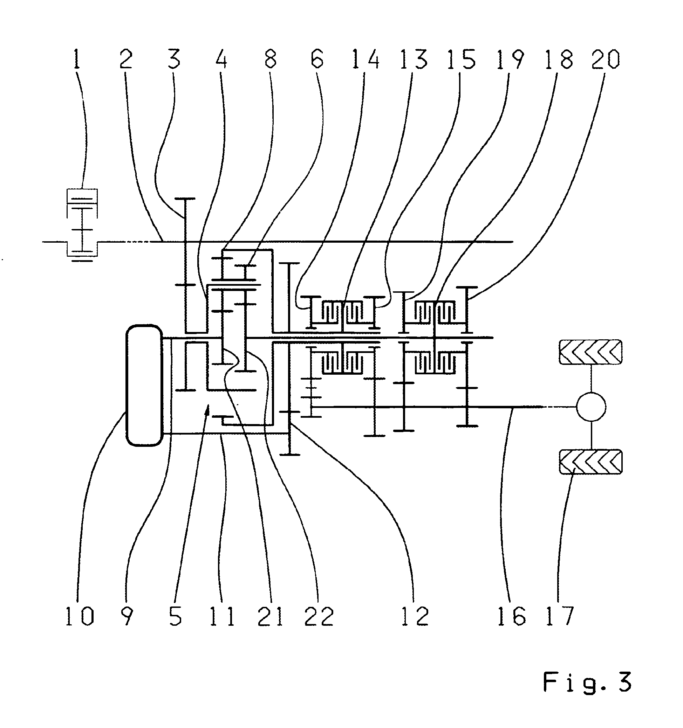

- Fig. 3: ein Getriebeschema des Leistungsverzweigungsgetriebes, wobei das Summierungsplanetengetriebe zwei Sonnenräder aufweist und das Hohlrad mit dem zweiten Planetenrad in Wirkverbindung steht.

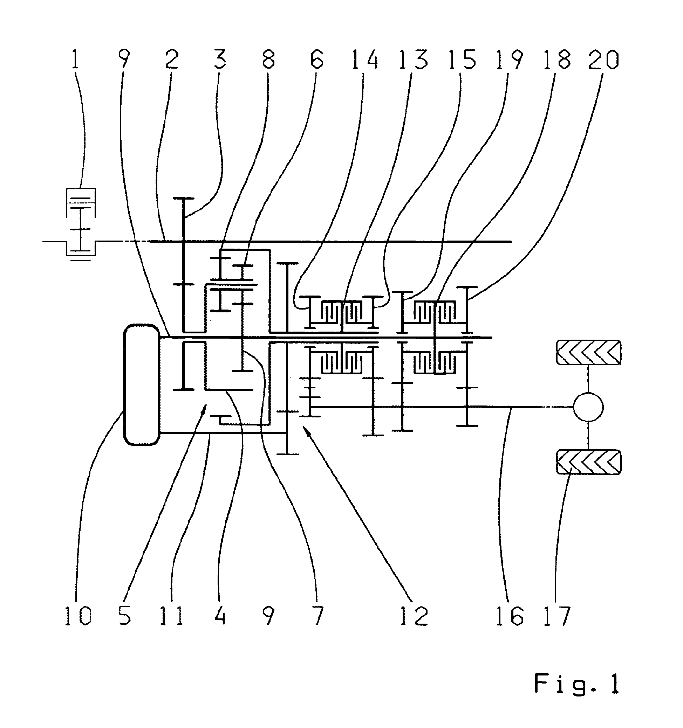

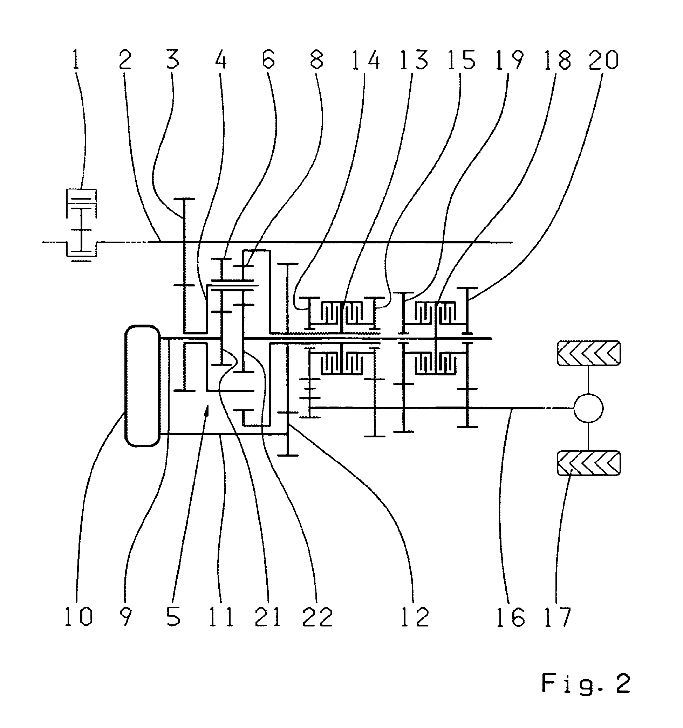

Fig. 1:
   Eine Antriebsmaschine 1 treibt eine Antriebswelle 2 an, welche über ein Stirnradgetriebe 3 den Planetenträger 4 eines Summierungsplanetengetriebes 5 antreibt. Mindestens ein Doppelplanetenrad 6 ist auf dem Planetenträger 4 gelagert und steht einerseits in Wirkverbindung mit einem Sonnenrad 7 und einem Hohlrad 8. Das Sonnenrad 7 ist mit einer ersten Welle 9 eines Variators 10 drehfest verbunden. Der Variator 10 ist vorzugsweise als Hydromodul mit zwei integrierten Schrägscheiben- oder Schrägachsentriebwerken mit einem Doppeljoch ausgebildet, wie in der DE 10 2006 025 347 B3 offenbart. Es besteht auch die Möglichkeit, zwei getrennte Verstelleinheiten in Schrägachsen- oder Schrägscheibenbauweise zu verwenden. Es besteht aber auch die Möglichkeit, den Variator als elektrischen Variator, bestehend aus einem elektrischen Generator und einem elektrischen Motor, auszubilden. Die zweite Welle 11 des Variators ist über ein Stirnradgetriebe 12 mit dem Hohlrad 8 wirkverbunden. Das Hohlrad 8 ist drehfest mit einer Schalteinrichtung 13 verbunden, über welche das Hohlrad 8 entweder über ein erstes Stirnradgetriebe 14 oder ein zweites Stirnradgetriebe 15 mit der Abtriebswelle 16 verbindbar ist. Die Abtriebswelle 16 treibt eine Antriebsachse 17 an. Das Sonnenrad 7 ist drehfest mit einer Schalteinrichtung 18 verbunden, über welche das Sonnenrad 7 entweder über ein drittes Stirnradgetriebe 19 oder über ein viertes Stirnradgetriebe 20 mit der Abtriebswelle 16 verbindbar ist. Die Stirnradgetriebe 14, 15, 19 und 20 sowie die Schalteinrichtungen 13 und 18 sind dem Summierungsplanetengetriebe 5 nachgeschaltet angeordnet. Die Abtriebswelle 16, die Antriebswelle 2 sowie die Sonnenradwelle bzw. die erste Welle 9 sind beabstandet und parallel zueinander angeordnet. Durch die Verwendung eines Doppelplanetenrades 8 im Summierungsplanetengetriebe 5 kann der Abstand zwischen den Wellen 2, 9 und 16 so verringert werden, dass das Getriebe in einem Schlepper verwendet werden kann.
Fig. 2:
   Diese unterscheidet sich von der Fig. 1 dadurch, dass das Summierungsplanetengetriebe 5 ein erstes Sonnenrad 21 und ein zweites Sonnenrad 22 aufweist, wobei das erste Sonnenrad 21 mit der ersten Welle 9 drehfest verbunden ist und mit dem Doppelplanetenrad 6 in Wirkverbindung steht, und das zweite Sonnenrad 22 drehfest mit der Schalteinrichtung 13 verbunden ist und mit dem Doppelplanetenrad 6 in Wirkverbindung steht. Das Hohlrad 8 steht mit dem Planetenrad des Doppelplanetenrades 6 in Wirkverbindung, welches den kleineren Durchmesser aufweist.
Fig. 3:
   Der Unterschied zur Fig. 2 besteht darin, dass das Hohlrad 8 mit dem Planetenrad des Doppelplanetenrades 6 in Wirkverbindung steht, welches den größeren Durchmesser aufweist.

### Bezugszeichen

- 1: Antriebsmaschine
- 2: Antriebswelle
- 3: Stirnradgetriebe
- 4: Planetenträger
- 5: Summierungsplanetengetriebe
- 6: Doppelplanetenrad
- 7: Sonnenrad
- 8: Hohlrad
- 9: erste Welle
- 10: Variator
- 11: zweite Welle
- 12: Stirnradgetriebe
- 13: Schalteinrichtung
- 14: erstes Stirnradgetriebe
- 15: zweites Stirnradgetriebe
- 16: Abtriebswelle
- 17: Antriebsachse
- 18: Schalteinrichtung
- 19: drittes Stirnradgetriebe
- 20: viertes Stirnradgetriebe
- 21: erstes Sonnenrad
- 22: zweites Sonnenrad

## Patentansprüche

1. Leistungsverzweigungsgetriebe mit einer Antriebswelle (2), welche von einem Antriebsmotor (1) antreibbar ist, und einem Summierungsplanetengetriebe (5) mit einem Hohlrad (8) und mindestens einem Sonnenrad (7, 21, 22), wobei das Summierungsplanetengetriebe (5) ein Doppelplanetenrad (6) aufweist, wobei die Drehachse des Sonnenrades (7, 21, 22) beabstandet zur Drehachse der Antriebswelle (2) angeordnet ist, mit einem stufenlos verstellbaren Variator (10), wobei der Variator (10) eine erste Welle (9) und eine zweite Welle (11) aufweist, wobei die erste Welle (9) mit dem Sonnenrad (7, 21) in drehfester Verbindung steht und die zweite Welle (11) mit dem Hohlrad (8) über ein Stirnradgetriebe (12) in Wirkverbindung steht, wobei ein Sonnenrad (7, 22) über mindestens ein Schaltelement (18) mit einer Abtriebswelle (16) verbindbar ist und das Hohlrad (8) über mindestens ein Schaltelement (13) mit der Abtriebswelle (16) verbindbar ist.

2. Leistungsverzweigungsgetriebe nach Anspruch 1, **dadurch gekennzeichnet, dass** das Hohlrad (8) mittels einem Schaltelement (13) über ein erstes Stirnradgetriebe (14) mit der Abtriebswelle (16) verbindbar ist und das Hohlrad (8) mittels einem Schaltelement (13) über ein zweites Stirnradgetriebe (15) mit der Abtriebswelle (16) verbindbar ist.

3. Leistungsverzweigungsgetriebe nach Anspruch 1, **dadurch gekennzeichnet, dass** das Sonnenrad (7, 22) mittels einem Schaltelement (18) über ein drittes Stirnradgetriebe (19) mit der Abtriebswelle (16) verbindbar ist und das Sonnenrad (7, 22) mittels einem Schaltelement (18) über ein viertes Stirnradgetriebe (20) mit der Abtriebswelle (16) verbindbar ist.

4. Leistungsverzweigungsgetriebe nach Anspruch 1, **dadurch gekennzeichnet, dass** die Stirnräder des ersten Stirnradgetriebes (14) und des zweiten Stirnradgetriebes (15) und des dritten Stirnradgetriebes (19) und des vierten Stirnradgetriebes (20), welche mit dem Schaltelement (13, 18) verbunden sind, koaxial zur Drehachse des Sonnenrades (7, 22) angeordnet sind und die weiteren Stirnräder der Stirnradgetriebe (14, 15, 19, 20) koaxial zur Abtriebswelle (16) angeordnet sind.

5. Leistungsverzweigungsgetriebe nach Anspruch 1, **dadurch gekennzeichnet, dass** die Abtriebswelle (16) beabstandet zur Antriebswelle (2) angeordnet ist.

6. Leistungsverzweigungsgetriebe nach Anspruch 1, **dadurch gekennzeichnet, dass** die Drehachsen der Antriebswelle (2), der Abtriebswelle (16) und der Sonnenradwelle (7, 22) parallel angeordnet sind.

7. Leistungsverzweigungsgetriebe nach Anspruch 1, **dadurch gekennzeichnet, dass** der Variator (10) als hydrostatischer Variator mit Schrägachsentriebwerken und einem Doppeljoch ausgebildet ist.

8. Leistungsverzweigungsgetriebe nach Anspruch 1, **dadurch gekennzeichnet, dass** das Leistungsverzweigungsgetriebe in einem landwirtschaftlichen Fahrzeug verwendet wird.

## Claims

1. Power-branched transmission having a driveshaft (2) which can be driven by a drive engine (1), and a summing planetary gear mechanism (5) with a ring gear (8) and at least one sun gear (7, 21, 22), wherein the summing planetary gear mechanism (5) has a double planetary gear (6), wherein the rotational axis of the sun gear (7, 21, 22) is arranged at a distance from the rotational axis of the driveshaft (2), having an infinitely adjustable variator (10), wherein the variator (10) has a first shaft (9) and a second shaft (11), wherein the first shaft (9) is connected in a rotationally fixed fashion to the sun gear (7, 21), and the second shaft (11) is operatively connected to the ring gear (8) via a spur gear mechanism (12), wherein a sun gear (7, 22) can be connected to an output shaft (16) via at least one gearshift element (18), and the ring gear (8) can be connected to the output shaft (16) via at least one gearshift element (13).

2. Power-branched transmission according to Claim 1, **characterized in that** the ring gear (8) can be connected to the output shaft (16) by means of a gearshift element (13) via a first spur gear mechanism (14), and the ring gear (8) can be connected to the output shaft (16) by means of a gearshift element (13) via a second spur gear mechanism (15).

3. Power-branched transmission according to Claim 1, **characterized in that** the sun gear (7, 22) can be connected to the output shaft (16) by means of a gearshift element (18) via a third spur gear mechanism (19), and the sun gear (7, 22) can be connected to the output shaft (16) by means of a gearshift element (18) via a fourth spur gear mechanism (20) .

4. Power-branched transmission according to Claim 1, **characterized in that** the spur gears of the first spur gear mechanism (14) and of the second spur gear mechanism (15) and of the third spur gear mechanism (19) and of the fourth spur gear mechanism (20), which are connected to the gearshift element (13, 18), are arranged coaxially with respect to the rotational axis of the sun gear (7, 22), and the further spur gears of the spur gear mechanisms (14, 15, 19, 20) are arranged coaxially with respect to the output shaft (16).

5. Power-branched transmission according to Claim 1, **characterized in that** the output shaft (16) is arranged at a distance from the driveshaft (2).

6. Power-branched transmission according to Claim 1, **characterized in that** the rotational axes of the driveshaft (2), of the output shaft (16) and of the sun gear shaft (7, 22) are arranged in parallel.

7. Power-branched transmission according to Claim 1, **characterized in that** the variator (10) is embodied as a hydrostatic variator with oblique axis drive units and a double yoke.

8. Power-branched transmission according to Claim 1, **characterized in that** the power-branched transmission is used in an agricultural vehicle.

## Revendications

1. Transmission à répartition de puissance comprenant un arbre d'entraînement (2), lequel peut être entraîné par un moteur d'entraînement (1), et un engrenage planétaire de sommation (5) muni d'une couronne (8) et d'au moins une roue solaire (7, 21, 22), l'engrenage planétaire de sommation (5) comprenant une roue planétaire double (6), l'axe de rotation de la roue solaire (7, 21, 22) étant disposé à distance de l'axe de rotation de l'arbre d'entraînement (2), un variateur (10) réglable en continu, le variateur (10) comprenant un premier arbre (9) et un deuxième arbre (11), le premier arbre (9) étant relié de manière solidaire en rotation à la roue solaire (7, 21) et le deuxième arbre (11) coopérant avec la couronne (8) par l'intermédiaire d'un engrenage à pignons droits (12), une roue solaire (7, 22) pouvant être reliée par l'intermédiaire d'au moins un élément de commutation (18) à un arbre de sortie (16) et la couronne (8) pouvant être reliée par l'intermédiaire d'au moins un élément de commutation (13) à l'arbre de sortie (16).

2. Transmission à répartition de puissance selon la revendication 1, **caractérisée en ce que** la couronne (8) peut être reliée à l'arbre de sortie (16) au moyen d'un élément de commutation (13) par l'intermédiaire d'un premier engrenage à pignons droits (14) et la couronne (8) peut être reliée à l'arbre de sortie (16) au moyen d'un élément de commutation (13) par l'intermédiaire d'un deuxième engrenage à pignons droits (15).

3. Transmission à répartition de puissance selon la revendication 1, **caractérisée en ce que** la roue solaire (7, 22) peut être reliée à l'arbre de sortie (16) au moyen d'un élément de commutation (18) par l'intermédiaire d'un troisième engrenage à pignons droits (19) et la roue solaire (7, 22) peut être reliée à l'arbre de sortie (16) au moyen d'un élément de commutation (18) par l'intermédiaire d'un quatrième engrenage à pignons droits (20).

4. Transmission à répartition de puissance selon la revendication 1, **caractérisée en ce que** les pignons droits du premier engrenage à pignons droits (14), du deuxième engrenage à pignons droits (15), du troisième engrenage à pignons droits (19) et du quatrième engrenage à pignons droits (20) qui sont reliés à l'élément de commutation (13, 18) sont disposés de manière coaxiale à l'axe de rotation de la roue solaire (7, 22) et les autres pignons droits des engrenages à pignons droits (14, 15, 19, 20) sont disposés de manière coaxiale à l'arbre de sortie (16) .

5. Transmission à répartition de puissance selon la revendication 1, **caractérisée en ce que** l'arbre de sortie (16) est disposé à distance de l'arbre d'entraînement (2).

6. Transmission à répartition de puissance selon la revendication 1, **caractérisée en ce que** les axes de rotation de l'arbre d'entraînement (2), de l'arbre de sortie (16) et de l'arbre de la roue solaire (7, 22) sont disposés de manière parallèle.

7. Transmission à répartition de puissance selon la revendication 1, **caractérisée en ce que** le variateur (10) est réalisé en tant que variateur hydrostatique avec des mécanismes d'entraînement à axes obliques et une fourche double.

8. Transmission à répartition de puissance selon la revendication 1, **caractérisée en ce que** la transmission à répartition de puissance est utilisée dans un véhicule agricole.
